# EUROPÄISCHE PATENTSCHRIFT

(11) **EP 1 062 498 B1**
(45) Veröffentlichungstag und Bekanntmachung des Hinweises auf die Patenterteilung: **26.07.2006**
(21) Anmeldenummer: 98958167.3
(22) Anmeldetag: 24.09.1998
(51) Int. Cl.: G01N 21/78

(54) **OPTISCHER SENSOR**
OPTICAL SENSOR
CAPTEUR OPTIQUE

(30) Priorität: 07.03.1998 DE 19809895; 25.06.1998 DE 19828343
(43) Veröffentlichungstag der Anmeldung: 27.12.2000
(73) Patentinhaber: ROBERT BOSCH GMBH, 70442 Stuttgart (DE)
(72) Erfinder: MÜLLER-FIEDLER, Roland, D-71229 Leonberg (DE); SAUTTER, Helmut, D-71254 Ditzingen (DE); SCHNEIDER, Joachim, D-82008 Unterhaching (DE); PFEFFERSEDER, Anton, D-82054 Sauerlach (DE); BERNHARD, Winfried, D-70839 Gerlingen (DE); MUELLER, Andre, D-70839 Gerlingen (DE); HENSEL, Andreas, D-71665 Vaihingen (DE); OPPELT, Ulrich, D-85604 Zorneding (DE); MUELLER, Lutz, D-70839 Gerlingen (DE)
(86) Internationale Anmeldenummer: PCT/DE1998/002848
(87) Internationale Veröffentlichungsnummer: WO 1999/045369

(56) Entgegenhaltungen:
- EP-A- 0 120 231
- EP-A- 0 193 037
- EP-A- 0 352 631
- EP-A- 0 434 893
- WO-A-95/08107
- US-A- 4 677 078

## Beschreibung

Die Erfindung betrifft einen optischen Sensor mit den im Oberbegriff des Patentanspruchs 1 genannten Merkmalen sowie dessen Verwendung.

### Stand der Technik

Es gibt eine Vielzahl von Anwendungsgebieten für Sensoren. Zu diesen zählt der Einsatz von Gassensoren zur Brandfrüherkennung. So sind in der älteren deutschen Patentanmeldung 197 41 335.8 optische Gassensoren beschrieben, die auf dem Prinzip einer Wechselwirkung von bestimmten Gasen mit einer lichtteildurchlässigen Schicht beruhen, wobei ein Absorptionsgrad von Licht bestimmter Wellenlänge abhängig ist von der Gaskonzentration. Nachteilig an den bekannten optischen Gassensoren sind die relativ aufwendigen und voluminösen Meßaufbauten, da neben einem optischen Sender und einem optischen Empfänger eine Anordnung einer gassensitiven Schicht innerhalb eines Strahlenganges zwischen diesen beiden Bauteilen notwendig ist. Insbesondere sind Messungen, bei denen Gaskonzentrationen an von den optischen Bauteilen räumlich entfernten und beispielsweise stark temperaturbelasteten Stellen gemessen werden sollen, nur schwierig möglich.

Aus der europäischen Patentanmeldung EP 0 434 893 A2 ist eine Detektionsvorrichtung zum Detektieren von abnormalen Zuständen bekannt, die eine Lichtquelle, Lichtwellenleiter, ein Farbindikatormaterial und einen Licht detektierenden Sensor umfasst.

In der Schrift EP-A-0 434 893 wird ein Meßsystem offenbart, bei dem mittels eines Sensors für den pH-Wert eines Gases sich die Absorptionseigenschaften des pH-Sensors in Abhängigkeit von dem vorliegenden Gas ändern. Dafür wird mit einem optischen Sender der pH-Sensor mit einem Spektrum elektromagnetischer Strahlung bestrahlt; und das den pH-Sensor passierende Licht wird mittels eines Spektrometers und eines optischen Empfängers, vorzugsweise eines Fotomultipliers, gemessen. In einer Weiterbildung wird ein Aufbau mit einem Lichtwellenleiter beschrieben.

### Vorteile der Erfindung

Der erfindungsgemäße optische Sensor mit den im Patentanspruch 1 genannten Merkmalen bietet den Vorteil, daß durch die räumliche Trennbarkeit des wenigstens einen optischen Senders und des wenigstens einen optischen Empfängers sowie einer mit einer Probe, beispielsweise einem Gas oder Gasgemisch, wechselwirkenden, die Transmission für Licht bestimmter Wellenlänge verändernden, sensitiven Schicht sehr kompakte und kostengünstige integrierte Bauteile darstellbar sind. Bei einer Koppelung eines vorzugsweise aus optischem Sender und optischem Empfänger bestehenden integrierten Moduls mit der an beliebigem entfernten Ort einsetzbaren sensitiven Schicht über Lichtwellenleiter ist die völlige räumliche Trennung dieser Baueinheiten voneinander und damit eine Positionierung der gassensitiven Schicht auch an solchen Orten möglich, wo aufgrund der Platzverhältnisse oder der thermischen oder mechanischen Verhältnisse keine empfindlichen optischen und/oder elektronischen Bauteile eingebaut werden können.

Durch den Einsatz einer für elektromagnetische Strahlung weitgehend durchlässigen und bei Kontakt mit einem Gas oder einem Gasgemisch seine Absorptionseigenschaften und/oder seinen Brechungsindex für elektromagnetische Strahlung verändernden gassensitiven Schicht oder Membran, auch als Optode bezeichnet, als sensitives Element können auf einfache Weise sehr kompakte und miniaturisierbare Gassensoren hergestellt werden. Unter einer Optode werden im Zusammenhang mit der vorliegenden Erfindung insbesondere Polymerschichten verstanden, die aufgrund in ihr eingelagerter Indikatorsubstanzen eine Abhängigkeit der Lichttransmission von der Konzentration eines bestimmten Gases in der die Optode umgebenden Atmosphäre zeigen. Erfindungsgemäß eingesetzte Optoden reagieren selektiv und reversibel auf die Konzentration eines bestimmten Gases. Durch Messung der Absorptionseigenschaften der dem Gas ausgesetzten und mit diesem wechselwirkenden, in der gassensitiven Schicht oder Membran vorhandenen, Indikatorsubstanz können mit relativ einfachen optischen Vorrichtungen sehr geringe Gaskonzentrationen gemessen und nachgewiesen werden. Vorzugsweise spricht die in der gassensitiven Schicht vorhandene, in einer Polymermatrix eingelagerte, Indikatorsubstanz nur auf ein bestimmtes Gas an, so daß mit verschiedenen Indikatorsubstanzen jeweils gasspezifisch wirkende Sensoren darstellbar sind.

In einer vorteilhaften Ausgestaltung des optischen Sensors ist wenigstens einer Quelle für elektromagnetische Strahlung, einem optischen Sender, und wenigstens einem Detektor für elektromagnetische Strahlung, einem optischen Empfänger, in deren Strahlengang eine gassensitive Schicht mit aufgebrachter oder integrierter Indikatorsubstanz zwischengeschaltet, die je nach physikalischer und/oder chemischer Wechselwirkung mit einem bestimmten Gas die Transmissions- beziehungsweise Absorptionseigenschaften für die elektromagnetische Strahlung verändert. Die gassensitive Schicht ist über wenigstens einen Lichtwellenleiter mit dem Sender und Empfänger gekoppelt. Die Quelle für elektromagnetische Strahlung kann beispielsweise eine Leuchtdiode als optischer Sender sein, die Licht mit geeigneter Wellenlänge abstrahlt. Als Detektor wird dementsprechend eine Photodiode als optischer Empfänger mit einem auf die abgestrahlte Wellenlänge der Leuchtdiode abgestimmten Frequenzbereich verwendet. Ein derartiger Aufbau kann in einfacher Weise mit sehr kostengünstigen Einzelteilen realisiert werden. Die im Strahlengang zwischen optischem Sender und optischem Empfänger angeordnete gas-sensitive Schicht mit der darin enthaltenen oder darauf aufgebrachten Indikatorsubstanz wird vorzugsweise entsprechend ihren Absorptionseigenschaften bei bestimmten Lichtwellenlängen quantitativ kalibriert, so daß verschiedene Lichtwellenlängen mit verschieden reagierenden Indikatorsubstanzen unterschiedliche Gase detektieren können.

Weiterhin ist es vorteilhaft, mehrere optische Sender mit mehreren gassensitiven Schichten, die jeweils unterschiedliche Gase detektieren können, zu kombinieren, so daß mit einer einzigen Vorrichtung mehrere verschiedene Gase detektiert werden können.

Der Strahlengang zwischen optischem Sender und optischem Empfänger mit dazwischenliegender gassensitiver Schicht wird in vorteilhafter Weise verlängert, indem Lichtwellenleiter als optische Koppelelemente verwendet werden. Dadurch können wenigstens zwei an verschiedenen Orten plazierte optische Sender und Empfänger mit einer gassensitiven Schicht optisch gekoppelt werden. Möglich ist auch ein räumlicher Zusammenbau von optischem Sender und optischem Empfänger am gleichen Ort und eine optische Koppelung über eine sehr große Entfernung mittels zwei parallel geführter Lichtwellenleiter.

In einer weiteren vorteilhaften Ausgestaltung ist der Einsatz nur eines Lichtwellenleiters vorgesehen, der durch seine besondere Gestaltung mit einer kegeligen Spitze und darauf aufgebrachter gassensitiver Schicht eine effektive Detektion von Gasen auch an Orten erlaubt, die von optischem Sender und Empfänger sehr weit entfernt sein können. Hierbei sind an einem Ende des Lichtwellenleiters die nebeneinander stehenden optischen Sender und Empfänger derart angeordnet, daß der vom optischen Sender ausgehende Lichtstrahl parallel zu dem auf den optischen Empfänger geleiteten Lichtstrahl innerhalb des Lichtwellenleiters verläuft. Der hierbei verwendete Lichtwellenleiter weist somit zweckmäßigerweise einen Durchmesser auf, der es erlaubt, optische Sender und Empfänger, die stark miniaturisiert sein können, nebeneinander anzuordnen. An dem anderen Ende weist der Lichtwellenleiter zweckmäßigerweise eine kegelige Spitze auf, die teilweise oder vollständig mit einer gassensitiven Schicht bedeckt ist. Der Kegelwinkel sollte hierbei annähernd 90° betragen, um eine gewünschte zweimalige Umlenkung des Lichts um 90°, das heißt insgesamt um 180°, zu erreichen. Da das Licht aufgrund annähernd gleicher Brechungsindizes des Lichtwellenleiters und der Beschichtung die Grenzfläche zwischen diesen fast ungehindert, das heißt ohne Reflexion, durchdringen kann, an der Grenzfläche der Beschichtung zum umgebenden Medium, beispielsweise Luft, aufgrund der deutlich unterschiedlichen Brechungsindizes jedoch reflektiert wird, findet eine zweimalige Reflexion um 90° statt. Der Lichtstrahl verläßt die Meßanordnung nicht, sondern verläuft im Lichtwellenleiter zurück zum optischen Empfänger. Bei einer solchen Anordnung wird somit die gassensitive Schicht jeweils auf vier Strecken von einem Lichtstrahl durchquert, wodurch sich Änderungen der Absorptionseigenschaften aufgrund eines detektierten Gases stärker auf das vom optischen Empfänger registrierte Signal auswirken als bei einer nur ein- oder zweimaligen Durchdringung einer gassensitiven Schicht. Neben einer konstruktiven Vereinfachung aufgrund nur eines Lichtwellenleiters lassen sich derartige Anordnungen besonders gut miniaturisieren.

In einer bevorzugten Anwendung können derartige optische Sensoren zur Untersuchung und/oder Überwachung von Abgasen von Brennkraftmaschinen, insbesondere von Kraftfahrzeug-Brennkraftmaschinen, eingesetzt werden. So können die aus dem optischen Sensor und einer nachgeschalteten Auswerteeinheit erhaltenen Meßwerte zur Steuerung der Brennkraftmaschine verwendet werden, beispielsweise zur Einhaltung genauer Abgaswerte und/oder zur Überwachung und Steuerung einer katalytischen Nachverbrennung in einem Katalysator im Abgastrakt der Brennkraftmaschine. Auch ist eine genaue Bestimmung des stöchiometrischen Luftverhältnisses, des sogenannten Lambdawertes, in Abgasen von Brennkraftmaschinen, durch eine Bestimmung der Anteile von O₂, CO, CO₂, HC und NO_{X} möglich. Durch den Einsatz mehrerer solcher Sensoren kann auch ein sogenanntes abgasoptimiertes Motormanagement sowie eine permanente Überwachung der Verbrennungsabläufe durchgeführt werden, womit sowohl der Kraftstoffverbrauch der Brennkraftmaschine als auch deren Abgasverhalten sowie ihr Verschleißverhalten optimiert werden kann.

Die erfindungsgemäße Vorrichtung kann weiterhin zur Überwachung einer Luftgüte, beispielsweise zur Steuerung von Lüftungsklappen in Klimaanlagen, vorteilhaft eingesetzt werden. Ebenso können erfindungsgemäße Vorrichtungen zur Lüftungs- und Klimaregelung in Innenräumen eingesetzt werden. Weiterhin können erfindungsgemäße optische Sensoren zur Überwachung und/oder Regelung von mit Kohlenwasserstoffen betriebenen Verbrennungs-, Feuerungs- oder Kraftwerksanlagen eingesetzt werden. Eine weitere Einsatzmöglichkeit ist beispielsweise die Messung von NH₃-Konzentrationen in Kühlhäusern oder Kühlanlagen mit Ammoniak als Kühlmittel. Selbstverständlich eignen sich derartige optische Sensoren auch für Rauch- und/oder Brandmelder, wobei durch eine Bestimmung von Brandleitgasen durch einzelne optische Sensoren oder eine Kombination mehrerer Sensoren die Detektions- und Meldezeit gegenüber bekannten Vorrichtungen stark reduziert sowie die Falschalarmsicherheit signifikant erhöht werden kann.

Weitere vorteilhafte Ausgestaltungen der Erfindung ergeben sich aus den übrigen, in den Unteransprüchen genannten, Merkmalen.

### Zeichnungen

Die Erfindung wird nachfolgend in einem Ausführungsbeispiel anhand der zugehörigen Zeichnungen näher erläutert. Es zeigen:
- Figur 1: ein Absorptionsspektrum einer auf NOₓ sensitiven Schicht;
- Figur 2: eine Meßanordnung mit einer gassensitiven Schicht zwischen einem optischen Sender und einem optischen Empfänger;
- Figur 3: eine Meßanordnung mit nur einem Lichtwellenleiter zur optischen Koppelung;
- Figur 4: eine alternative Meßanordnung mit nur einem Lichtwellenleiter;
- Figur 5: eine Aufsicht auf Figur 4;
- Figur 6: eine weitergebildete Meßanordnung mit zwei Lichtwellenleitern und zwei optischen Sendern, aber nur einem optischen Empfänger;
- Figur 7: eine mögliche Aufsicht auf Figur 6;
- Figur 8: eine andere mögliche Aufsicht auf Figur 6;
- Figur 9: eine Alternative zu Figur 6;
- Figur 10: Alternativanordnungen zu den Figuren 5, 7 8;
- Figur 11: eine andere mögliche Aufsicht auf Figur 4.

### Beschreibung der Ausführungsbeispiele

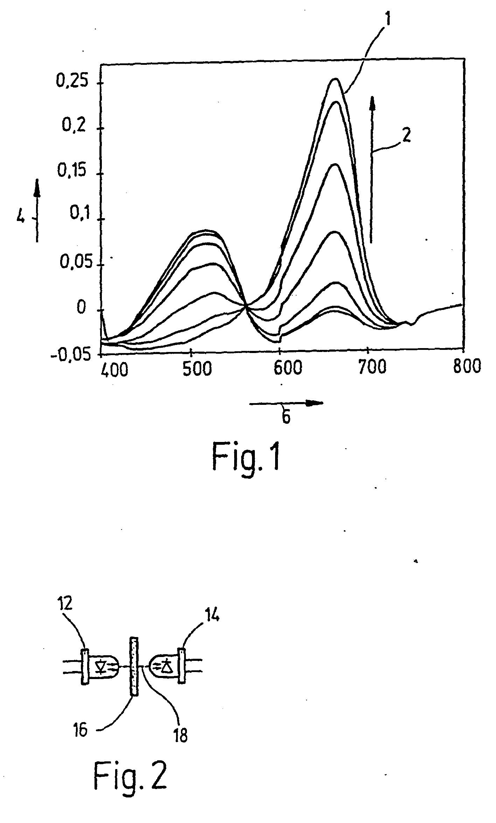

Figur 1 zeigt in einem Diagramm beispielhaft einen qualitativen Zusammenhang zwischen der Wellenlänge und dem Absorptionsgrad von elektromagnetischer Strahlung einer gassensitiven Schicht bei verschiedenen Konzentrationen eines mit der gassensitiven Schicht in Berührung kommenden Gasgemisches. Auf der horizontalen Achse 6 des Diagramms ist die Wellenlänge λ der elektromagnetischen Strahlung in Nanometern (nm) aufgetragen. Im gezeigten Ausführungsbeispiel handelt es sich bei der elektromagnetischen Strahlung vorzugsweise um Licht in einem für das menschliche Auge sichtbaren Bereich. Auf der vertikalen Achse 4 ist ein relativer Absorptionswert aufgetragen, der bei vollständiger Absorption einen Wert von 1,0 annehmen würde. Im Ausführungsbeispiel handelt es sich bei der gassensitiven Schicht um eine für NO und/oder NOₓ sensitive, das heißt mit diesem Gas physikalisch und/oder chemisch wechselwirkende, Schicht. Es ist eine Kurvenschar 1 für verschiedene Konzentrationen von NO aufgetragen. Erkennbar ist, daß innerhalb eines bestimmten Lichtwellenlängenbereiches, im gezeigten Beispiel um ca. 670 nm, die Absorption von Licht bei Vorliegen einer bestimmten NO-Konzentration ein deutliches Maximum aufweist. Die Kurvenschar 1 enthält mehrere Kurven, deren jeweiliges lokales Maximum bei gleicher Wellenlänge und steigender NO-Konzentration größer wird. Bei stärkerer NO-Konzentration des mit der gassensitiven Schicht wechselwirkenden Gasgemisches wird transmittierendes Licht stärker absorbiert. Diese Zunahme ist durch einen senkrecht nach oben gerichteten Pfeil 2 angedeutet. Ein Sensoreffekt, das heißt die Absorptions- beziehungsweise die Transmissionsänderungen, kann bei den verwendeten gassensitiven Schichten in der Regel in relativ engen Wellenlängenbereichen nachgewiesen werden. Als in der gassensitiven Schicht verwendete Träger eignen sich vorzugsweise bestimmte Polymere, die chemisch weitgehend inert sind, so daß sichergestellt ist, daß nur eine darauf aufgebrachte oder darin eingelagerte Indikatorsubstanz mit dem fraglichen Gas und/oder Gasgemisch wechselwirken kann. Die gassensitive Schicht kann beispielsweise auf ein Trägerplättchen aufgebracht sein. Weiterhin ist mit dieser Meßmethode möglich, mehrere optische Empfänger mit jeweils unterschiedlichen gassensitiven Schichten zu versehen und auf diese Weise kombinierte optische Sensoren darzustellen, die auf eine Vielzahl von verschiedenen Gasen ansprechen. Für die bekannten Indikatorsubstanzen liegen die kleinsten bisher nachweisbaren Gaskonzentrationen für NOₓ im Bereich von wenigen ppb.

Figur 2 zeigt eine grundsätzliche und für sich bekannte Meßanordnung für einen optischen Sensor, bestehend aus einer Quelle für elektromagnetische Strahlung als optischem Sender 12, hier einer Leuchtdiode, und einem Detektor für elektromagnetische Strahlung als optischem Empfänger 14, beispielsweise einer Photodiode. Mit solchen Bauteilen sind kleine kompakte und kostengünstige optische Sensoren darstellbar, die zudem mit sehr wenig Energie auskommen. Es können optische Sender 12 und Empfänger 14 verwendet werden, die mit infrarotem oder ultraviolettem Licht oder die mit Licht im sichtbaren Wellenlängenbereich arbeiten. Entscheidend für die Funktion der Meßanordnung ist die Abstimmung zwischen der Wellenlänge des vom optischen Sender 12 ausgesandten Lichts und der absorbierten Wellenlänge einer im folgenden beschriebenen gassensitiven Schicht 16. Zwischen optischem Sender 12 und in dessen direktem Strahlengang 18 in gewissem Abstand angebrachtem optischem Empfänger 14 befindet sich.eine für die Strahlung des optischen Senders 12 durchlässige gassensitive Schicht 16, beispielsweise bestehend aus einem Träger aus Polymermaterial, das mit einer bestimmten Indikatorsubstanz versehen ist.

Die gassensitive Schicht 16 kann ein von dem optischen Sender 12 ausgesandtes Licht bestimmter Wellenlänge bei Wechselwirkung mit bestimmten Gasen teilweise absorbieren.

Die gassensitive Schicht 16 enthält eine für ein bestimmtes Gas sensitive Indikatorsubstanz und wird vor dem Einbau mittels vorheriger Eichmessungen kalibriert. Sobald das zu detektierende Gas in den Bereich zwischen optischem Sender 12 und optischem Empfänger 14 eintritt, ändert die in der gassensitiven Schicht 16 enthaltene Indikatorsubstanz ihre Absorption für bestimmte Wellenlängenbereiche der auf sie auftreffenden und hindurchtretenden elektromagnetischen Strahlung. Da diese Wellenlänge einem lokalen Absorptionsmaximum der Indikatorsubstanz entspricht, registriert der im Strahlengang 18 nach der Schicht 16 angeordnete optische Empfänger 14 eine veränderte Transmission. Die Höhe des Absorptionsmaximums ist proportional zur Konzentration des Gases. Diese kann mittels einer hier nicht dargestellten Auswerteeinheit erfaßt und beispielsweise mit einem Signalgeber verbunden sein.

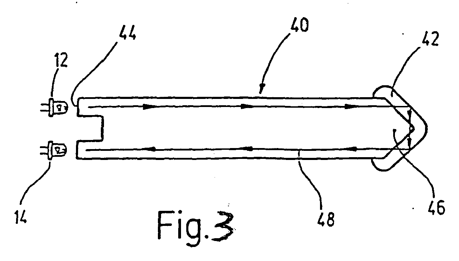

Figur 3 zeigt schließlich einen modifizierten Meßaufbau mit einer Verwendung nur eines Lichtwellenleiters. Gleiche Teile wie in den vorherigen Figuren sind mit gleichen Bezugszeichen versehen und nicht nochmals erläutert. Bei diesem Meßaufbau wird das vom optischen Sender 12 in eine zur Längsrichtung des Lichtwellenleiters 40 senkrechte Stirnseite 44 eingekoppelte Licht zu einer gassensitiven Schicht 42 geleitet, die auf der kegelförmigen Spitze 46 des Lichtwellenleiters 40 aufgebracht ist. Die Grenzflächen zwischen Lichtwellenleiter 40 und gassensitiver Schicht 42 werden vom Licht nahezu ungehindert passiert, da beide einen fast gleichen Brechungsindex aufweisen. An der Grenzschicht zwischen gassensitiver Schicht 42 und der Umgebungsluft wird das Licht jedoch aufgrund des unterschiedlichen Brechungsindex reflektiert. Der entsprechende Strahlengang 48 für einen Winkel der kegelförmigen Spitze 46 des Lichtwellenleiters 40 von 90° ist in der Figur 3 beispielhaft eingezeichnet. Der Strahlengang 48 erfährt eine zweimalige Umlenkung um 90°, jeweils an den Grenzschichten zwischen Luft und gassensitiver Schicht 42, bevor er schließlich um 180° umgelenkt wieder zurück zur Stirnseite 44 und zum optischen Empfänger 14 läuft. Optischer Empfänger 14 und optischer Sender 12 sind hierbei unmittelbar nebeneinander parallel zueinander angeordnet. Durch die viermalige Durchquerung der gassensitiven Schicht 42, vom Licht wirken sich Absorptionsänderungen der gassensitiven Schicht stärker auf das vom optischen Empfänger detektierte Signal aus als bei Anordnungen nach der Figur 2.

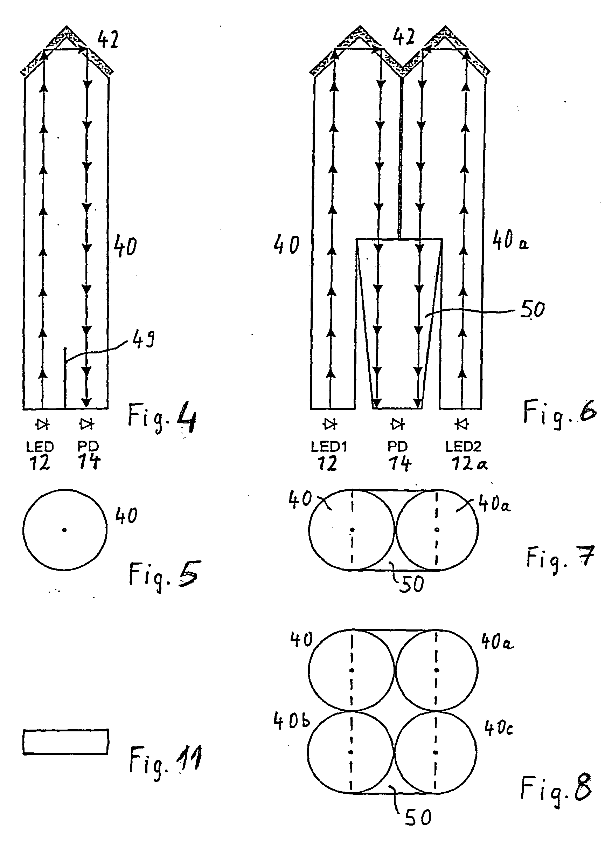

Der Lichtwellenleiter 40 nach Figur 4 weist an dem Ende, an dem sich der optische Sender 12 (beispielsweise eine Licht emittierende Diode LED) und der optische Empfänger 14 (beispielsweise eine Photodiode PD) befinden, einen Schlitz 49 auf zur Vermeidung des direkten Lichtübertrittes vom Sender 12 zum Empfänger 14. Der Lichtwellenleiter 40 kann zusammen mit dem Empfänger 14 und dem Sender 12 auf einer Leiterplatte angebracht sein, und das Ende mit der Schicht 42 kann aus einem Gehäuse ragen.

Figur 5 zeigt einen möglichen Querschnitt des Lichtwellenleiters 40. Der Querschnitt kann aber auch rechteckig nach Figur 11 sein; dann bedeckt die Schicht 42 einen keilförmigen Oberflächenanteil des Lichtwellenleiters 40. Andere Querschnittsgeometrien sind auch möglich.

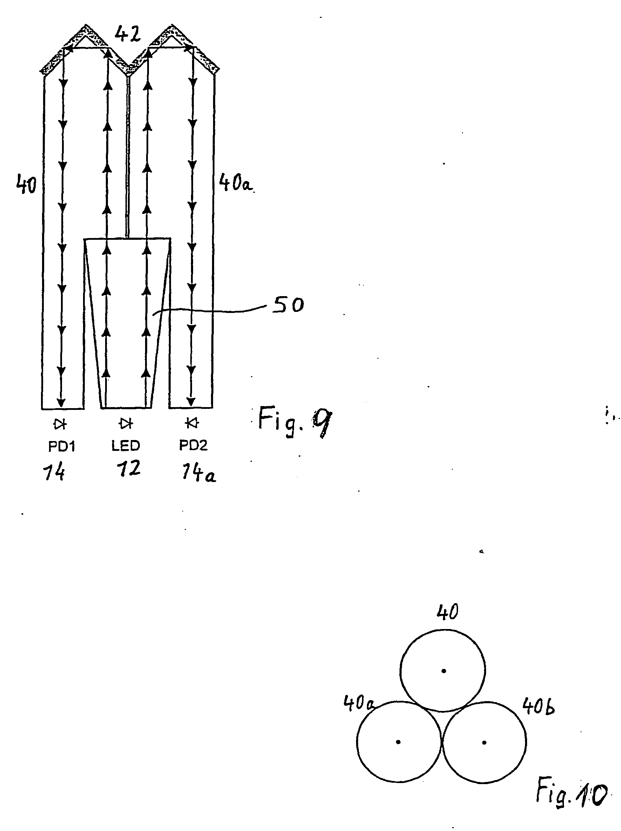

Es können auch mehrere Lichtwellenleiter 40, 40a miteinander kombiniert sein, wobei entweder nach Figur 6 der optische Empfänger 14 oder nach Figur 9 der optische Sender 12 zentral für mehrere oder alle Lichtwellenleiter 40, 40a verwendet ist. In dieser Anordnung können mehrere Gase überwacht werden oder ein Lichtwellenleiter kann unbeschichtet als Referenz dienen.

Die Figuren 7 und 8 zeigen zwei mögliche Querschnitte der Figur 6, während Figur 10 einen Querschnitt einer Anordnung mit drei Lichtwellenleitern 40, 40a, 40b zeigt, für die keine Ansicht wiedergegeben ist. Zwischen einem Einsatz 50 in Figur 6 und den Lichtwellenleitern 40 beziehungsweise 40a befindet sich jeweils wieder ein Schlitz ähnlich dem Schlitz in Figur 4.

## Patentansprüche

1. Optischer Sensor zur Bestimmung eines physikalischen und/oder chemischen Parameters einer Gasprobe, mit wenigstens einem optischen Sender (12) und wenigstens einem optischen Empfänger (14) und einem in einem Strahlengang zwischen dem Sender (12) und dem Empfänger (14) angeordneten und der Gasprobe aussetzbaren, bei Parameteränderung der Gasprobe reversibel seine Absorption und/oder seinen Brechungsindex für elektromagnetische Strahlung bestimmter Wellenlänge verändernden, gassensitiven Elementes (24) und mit einer dem Empfänger (14) nachgeschalteten Auswerteeinheit, wobei das gassensitive Element (24) eine Indikatorsubstanz aufweist, wobei der Sender (12) und der Empfänger (14) über wenigstens einen Lichtwellenleiter (40) mit dem gassensitiven Element (24) gekoppelt sind, wobei der optische Sender (12), der optische Empfänger (14) und das gassensitive Element (24) derart ausgebildet sind, dass sie auf einen Wellenlängenbereich abgestimmt sind, dass der optische Empfänger (14) eine Fotodiode ist, dass das sensitive Element (24) eine für elektromagnetische Strahlung weitgehend durchlässige, gassensitive Schicht (42) ist, die bei Kontakt mit einem Gas oder einem Gasgemisch ihre Absorptionseigenschaften und/oder ihren Brechungsindex für elektromagnetische Strahlung verändert, dass der Lichtwellenleiter (40) an seinem dem Sender (12) und dem Empfänger (14) abgewandten Ende angeschrägt und mit einer gassensitiven Schicht (42) versehen, dass der Lichtwellenleiter (40) an seinem dem optischen Sender (12) und dem Empfänger (14) abgewandten Ende eine Spitze mit einem Spitzenwinkel von 90° aufweist und dass der Lichtwellenleiter (40) und die gassensitive Schicht (42) einen fast gleichen Brechungsindex aufweisen.

2. Sensor nach Anspruch 1, **dadurch gekennzeichnet, dass** die gassensitive Schicht (42) derart ausgebildet ist, dass sie durch eine Wechselwirkung mit dem Gas oder Gasgemisch ein lokales Absorptionsmaximum für elektromagnetische Strahlung aufweist, wobei die Lage des Absorptionsmaximums für ein bestimmtes Gas bei unterschiedlichen Wellenlängen liegt und die Höhe des Absorptionsmaximums mit der Konzentration des wechselwirkenden Gases korreliert ist.

3. Sensor nach Anspruch 2, **dadurch gekennzeichnet, dass** der Sender (12) und der Empfänger (14) räumlich von der gassensitiven Schicht (42) getrennt sind.

4. Sensor nach Anspruch 3, **dadurch gekennzeichnet, dass** der Sender (12) und der Empfänger (14) räumlich und/oder baulich zusammengefasst sind.

5. Sensor nach einem der vorhergehenden Ansprüche, **dadurch gekennzeichnet, dass** der Sender (12) und der Empfänger (14) auf einem gemeinsamen Bauteil integriert sind.

6. Sensor nach einem der Ansprüche 1 bis 5, **dadurch gekennzeichnet, dass** der Sender (12) und der Empfänger (14) über einen gemeinsamen Lichtwellenleiter (40) mit einer gassensitiven Schicht (42) gekoppelt sind.

7. Sensor nach Anspruch 1, **dadurch gekennzeichnet, dass** die Spitze kegelig ist.

8. Sensor nach Anspruch 1, **dadurch gekennzeichnet, dass** die Spitze keilförmig ist.

9. Sensor nach einem der Ansprüche 1, 7 oder 8, **dadurch gekennzeichnet, dass** die Spitze vollständig von der gassensitiven Schicht (42) umschlossen ist.

10. Sensor nach Anspruch 7, **dadurch gekennzeichnet, dass** der Lichtwellenleiter (40) an seinem dem Sender (12) und dem Empfänger (14) zugewandten Ende eine planare Fläche aufweist, die senkrecht zur Längsrichtung des Lichtwellenleiters (40) angeordnet ist.

11. Sensor nach einem der vorhergehenden Ansprüche, **dadurch gekennzeichnet, dass** der Lichtwellenleiter (40) zwischen dem Sender (12) und dem Empfänger (14) einen Längsschlitz (49) zur optischen Isolation aufweist.

12. Sensor nach einem der vorhergehenden Ansprüche, **dadurch gekennzeichnet, dass** der Sensor wenigstens zwei Lichtwellenleiter (40, 40a) mit ebenso vielen Sendern (12, 12a) und nur einem gemeinsamen Empfänger (14) aufweist.

13. Sensor nach einem der vorhergehenden Ansprüche, **dadurch gekennzeichnet, dass** der Sensor wenigstens zwei Lichtwellenleiter (40, 40a) mit ebenso vielen Empfängern (14, 14a) und nur einem gemeinsamen Sender (12) aufweist.

14. Sensor nach Anspruch 12 oder 13, **dadurch gekennzeichnet, dass** ein Lichtwellenleiter unbeschichtet und als Referenz vorgesehen ist.

15. Verwendung eines Sensors nach einem der Ansprüche 1 bis 14 zur Untersuchung von Abgasen von Brennkraftmaschinen, insbesondere von Brennkraftmaschinen von Kraftfahrzeugen.

16. Verwendung nach Anspruch 15, **dadurch gekennzeichnet, dass** mit den aus der Auswerteeinheit gewonnenen Messwerten eine Beeinflussung der Steuerung der Brennkraftmaschine erfolgt.

17. Verwendung eines Sensors nach einem der Ansprüche 1 bis 14 zur Überwachung der Luftgüte in Innenräumen.

18. Verwendung nach Anspruch 17, **dadurch gekennzeichnet, dass** mit den erhaltenen Messwerten Vorrichtungen zur Lüftungs- und Klimaregelung in den Innenräumen geregelt werden.

19. Verwendung eines Sensors nach einem der Ansprüche 1 bis 14 zur Überwachung und Regelung von mit Kohlenwasserstoffen betriebenen Verbrennungs- und Feuerungsanlagen.

20. Verwendung eines Sensors nach einem der Ansprüche 1 bis 14 in Rauchmeldern.

## Claims

1. Optical sensor for the determination of a physical and/or chemical parameter of a gas sample, having at least one optical transmitter (12) and at least one optical receiver (14) and a gas-sensitive element (24) which is arranged in a beam path between the transmitter (12) and the receiver (14), can be exposed to the gas sample and reversibly changes its absorption and/or its refractive index for electromagnetic radiation of a particular wavelength in the event of a parameter change of the gas sample, and having an evaluation unit connected downstream of the receiver (14), the gas-sensitive element (24) comprising an indicator substance, the transmitter (12) and the receiver (14) being coupled via at least one optical waveguide (40) to the gas-sensitive element (24), the optical transmitter (12), the optical receiver (14) and the gas-sensitive element (24) being designed so that they are tuned to a wavelength range, the optical receiver (14) is a photodiode, the sensitive element (24) is a gas-sensitive layer (42) substantially transparent to electromagnetic radiation, which changes its absorption properties and/or its refractive index for electromagnetic radiation upon contact with a gas or a gas mixture, the optical waveguide (40) is pointed at its end remote from the transmitter (12) and the receiver (14) and provided with a gas-sensitive layer (42), the optical waveguide (40) having a tip with a tip angle of 90° at its end remote from the optical transmitter (12) and the receiver (14) and the optical waveguide (40) and the gas-sensitive layer (42) having an almost equal refractive index.

2. Sensor according to Claim 1, **characterized in that** the gas-sensitive layer (42) is designed so that it has a local absorption maximum for electromagnetic radiation due to an interaction with the gas or gas mixture, the position of the absorption maximum for a particular gas lying at different wavelengths and the height of the absorption maximum being correlated with the concentration of the interacting gas.

3. Sensor according to Claim 2, **characterized in that** the transmitter (12) and the receiver (14) are spatially separated from the gas-sensitive layer (42).

4. Sensor according to Claim 3, **characterized in that** the transmitter (12) and the receiver (14) are spatially and/or structurally combined.

5. Sensor according to one of the preceding claims, **characterized in that** the transmitter (12) and the receiver (14) are integrated on a common component.

6. Sensor according to one of Claims 1 to 5, **characterized in that** the transmitter (12) and the receiver (14) are coupled via a common optical waveguide (40) to a gas-sensitive layer (42).

7. Sensor according to Claim 1, **characterized in that** the tip is conical.

8. Sensor according to Claim 1, **characterized in that** the tip is wedge-shaped.

9. Sensor according to one of Claims 1, 7 and 8, **characterized in that** the tip is fully enclosed by the gas-sensitive layer (42).

10. Sensor according to Claim 7, **characterized in that** the optical waveguide (40) has a planar surface at its end facing the transmitter (12) and the receiver (14), which is arranged perpendicularly to the longitudinal direction of the optical waveguide (40).

11. Sensor according to one of the preceding claims, **characterized in that** the optical waveguide (40) has a longitudinal slot (49) for optical isolation between the transmitter (12) and the receiver (14).

12. Sensor according to one of the preceding claims, **characterized in that** the sensor comprises at least two optical waveguides (40, 40a) with an equal number of transmitters (12, 12a) and only one receiver (14).

13. Sensor according to one of the preceding claims, **characterized in that** the sensor comprises at least two optical waveguides (40, 40a) with an equal number of receivers (14, 14a) and only one transmitter (12).

14. Sensor according to Claim 12 or 13, **characterized in that** one optical waveguide is uncoated and provided as a reference.

15. Use of a sensor according to one of Claims 1 to 14 for analyzing exhaust gases of combustion engines, in particular combustion engines of motor vehicles.

16. Use according to Claim 15, **characterized in that** the control of the combustion engine is influenced using the measurement values obtained from the evaluation unit.

17. Use of a sensor according to one of Claims 1 to 14 for monitoring of the air quality in interior rooms.

18. Use according to Claim 17, **characterized in that** devices for ventilation and air conditioning control in the interior rooms are regulated using the measurement values obtained.

19. Use of a sensor according to one of Claims 1 to 14 for monitoring and regulating combustion and furnace installations fuelled using hydrocarbons.

20. Use of a sensor according to one of Claims 1 to 14 in smoke detectors.

## Revendications

1. Capteur optique pour la détermination d'un paramètre physique et/ou chimique d'un échantillon de gaz, comportant au moins un émetteur optique (12) et au moins un récepteur optique (14), ainsi qu'un élément sensible au gaz (24), monté dans une trajectoire de faisceau entre l'émetteur (12) et le récepteur (14) et pouvant être exposé à l'échantillon de gaz pour modifier de façon réversible en cas de modification des paramètres de l'échantillon de gaz, son absorption et/ou son indice de réfraction d'un rayonnement électromagnétique d'une certaine longueur d'onde, avec une unité d'exploitation en aval du récepteur (14), dans lequel
l'élément sensible au gaz (24) présente une substance constituant un indicateur,
l'émetteur (12) et le récepteur optique (14) couplés par au moins un conducteur en fibre optique (40) à l'élément sensible au gaz (24) sont adaptés à une gamme de longueur d'onde, le récepteur optique (14) étant une photodiode,
l'élément sensible au gaz (24) est une couche sensible au gaz (42) largement perméable à un rayonnement électromagnétique qui, au contact avec un gaz ou un mélange gazeux, modifie ses caractéristiques d'absorption et/ou son indice de réfraction d'un rayonnement électromagnétique,
le conducteur en fibre optique (40), à son extrémité à l'opposée de l'émetteur (12) et du récepteur (14), est chanfreiné et muni d'une couche sensible au gaz (42), et présente une pointe avec un angle au sommet de 90°, et
le conducteur en fibre optique (40) et la couche sensible au gaz (42) présentent un indice de réfraction presque égal.

2. Capteur selon la revendication 1,
**caractérisé en ce que**
la couche sensible au gaz (42) est conçue pour avoir en raison d'une action réciproque avec le gaz ou le mélange gazeux, un maximum local d'absorption de rayonnement électromagnétique dont l'emplacement du maximum d'absorption pour un gaz déterminé se situe à différentes longueurs d'onde et la hauteur du maximum d'absorption est en corrélation avec la concentration du gaz à action réciproque.

3. Capteur selon la revendication 2,
**caractérisé en ce que**
l'émetteur (12) et récepteur (14) sont séparés dans l'espace par rapport à la couche sensible au gaz (42).

4. Capteur selon la revendication 3,
**caractérisé en ce que**
l'émetteur (12) et récepteur (14) sont réunis dans l'espace et/ou par leur construction.

5. Capteur selon l'une des revendications précédentes,
**caractérisé en ce que**
l'émetteur (12) et récepteur (14) sont intégrés sur un composant commun.

6. Capteur selon l'une des revendications 1 à 5,
**caractérisé en ce que**
l'émetteur (12) et récepteur (14) sont couplés, par un conducteur en fibre optique (40) commun, avec une couche sensible au gaz (42).

7. Capteur selon la revendication 1,
**caractérisé en ce que**
la pointe est conique.

8. Capteur selon la revendication 1,
**caractérisé en ce que**
la pointe est cunéiforme.

9. Capteur selon l'une des revendications 1, 7 ou 8,
**caractérisé en ce que**
la pointe est complètement entourée par la couche sensible au gaz (42).

10. Capteur selon la revendication 7,
**caractérisé en ce que**
le conducteur en fibre optique (40) présente, sur son extrémité tournée vers l'émetteur (12) et le récepteur (14), une surface plane perpendiculaire à la direction longitudinale du conducteur en fibre optique (40).

11. Capteur selon l'une des revendications précédentes,
**caractérisé en ce que**
le conducteur en fibre optique (40) présente entre l'émetteur (12) et le récepteur (14) une fente longitudinale (49) pour l'isolation optique.

12. Capteur selon l'une des revendications précédentes,
**caractérisé en ce qu'**
il présente au moins deux conducteurs en fibre optique (40, 40a) avec le même nombre d'émetteurs (12, 12a) et seulement un récepteur (14) commun.

13. Capteur selon l'une des revendications précédentes,
**caractérisé en ce qu'**
il présente au moins deux conducteurs en fibre optique (40, 40a) avec le même nombre de récepteurs (14, 14a) et seulement un émetteur (12) commun.

14. Capteur selon la revendication 12 ou 13,
**caractérisé en ce qu'**
un conducteur en fibre optique non revêtu est prévu comme référence.

15. Utilisation d'un capteur selon l'une des revendications 1 à 14
pour l'analyse de gaz d'échappement de moteurs à combustion interne, en particulier sur des véhicules automobiles.

16. Utilisation selon la revendication 15,
**caractérisée en ce qu'**
on influence la commande du moteur à combustion interne par les valeurs mesurées obtenues par l'unité d'exploitation.

17. Utilisation d'un capteur selon l'une des revendications 1 à 14,
pour surveiller la qualité de l'air dans des espaces intérieurs.

18. Utilisation selon la revendication 17,
**caractérisée en ce que**
les valeurs mesurées permettent de régler des dispositifs de régulation de la ventilation et de la climatisation dans des espaces intérieurs.

19. Utilisation d'un capteur selon l'une des revendications 1 à 14, pour surveiller et réguler des installations de combustion et de chauffage fonctionnant avec des hydrocarbures.

20. Utilisation d'un capteur selon l'une des revendications 1 à 14, dans des détecteurs de fumée.
